# EUROPEAN PATENT APPLICATION

(11) **EP 4 354 640 A1**
(43) Date of publication of application: **17.04.2024**
(21) Application number: 23167968.9
(22) Date of filing: 14.04.2023
(51) Int. Cl.: H01M 50/533, H01M 50/538, H01M 10/04, H01M 10/0587, H01M 50/107, H01M 50/559

(54) **CYLINDRICAL BATTERY**

(30) Priority: 13.10.2022 CN 202211255826
(71) Applicant: CALB Group Co., Ltd., Changzhou City, Jiangsu Province (CN)
(72) Inventor: WANG, Yawei, Changzhou City, Jiangsu Province (CN); QI, Binwei, Luoyang City, Henan Province (CN); SUN, Qianqian, Changzhou City, Jiangsu Province (CN); ZHANG, Lulu, Changzhou City, Jiangsu Province (CN)
(74) Representative: Becker, Eberhard

(57) **Abstract**

The disclosure relates to the technical field of batteries, and a cylindrical battery is provided, including a wound core, and the wound core includes: a wound core body (21); a first tab portion (22), which extends from one side of the wound core body (21), the wound core body (21) is formed with a wound core hole (211), the first tab portion (22) includes a first tab set (221) and a second tab set (222) adjacent to each other, the first tab set (221) includes at least two first tabs (2211), and the second tab set (222) includes a second tab (2221); a first gap (2212) is formed between adjacent first tabs (2211), and the orthographic projections of the second tab (2221) and the first gap (2212) on the same plane at least partially overlap each other along the radial direction of the wound core hole (211).

## Description

### BACKGROUND

### Technical Field

The disclosure relates to the technical field of batteries, in particular to a cylindrical battery.

### Description of Related Art

In the related art, a cylindrical battery includes a wound core. When the core is wound, the problem of stacking occurs between adjacent tabs, which causes the overall thickness of a part of the tab is thick.

### SUMMARY

The disclosure provides a cylindrical battery, which includes a wound core, and the wound core includes: a wound core body; a first tab portion, which extends from one side of the wound core body, the wound core body is formed with a wound core hole, the first tab portion includes a first tab set and a second tab set adjacent to each other along a radial direction of the wound core hole or in a direction opposite to the radial direction, the first tab set includes at least two first tabs, and the second tab set includes a second tab; a first gap is formed between adjacent first tabs, and an orthographic projection of the second tab and an orthographic projection of the first gap on the same plane at least partially overlap each other along the radial direction of the wound core hole.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a schematic structural diagram of a battery according to an exemplary embodiment.
FIG. 2 is a schematic structural diagram of a wound core of a battery according to an exemplary embodiment.
FIG. 3 is a cross-sectional structural diagram of a wound core of a battery according to an exemplary embodiment.
FIG. 4 is a schematic structural diagram of a first tab set and a second tab set of a battery according to an exemplary embodiment.
FIG. 5 is a schematic structural diagram of a first tab set and a second tab set of a battery according to another exemplary embodiment.
FIG. 6 is a schematic structural diagram of a first tab set, a second tab set and a third tab set of a battery according to an exemplary embodiment.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

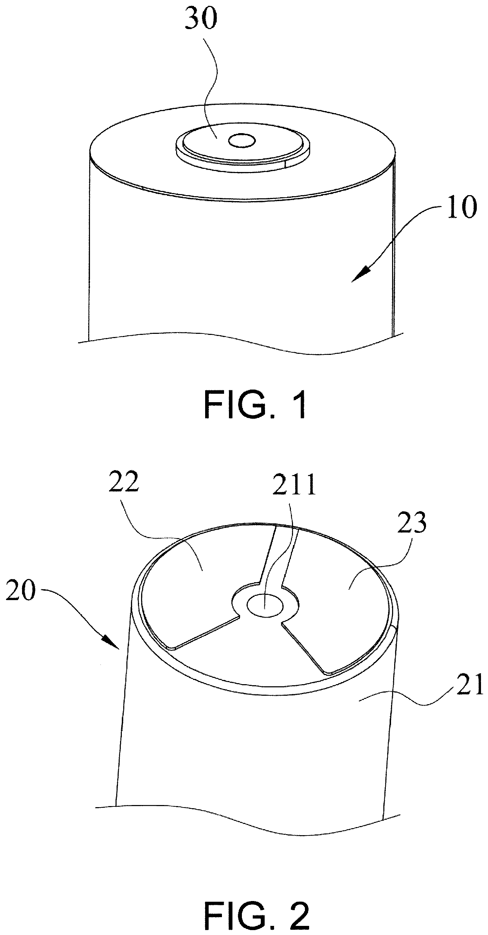

An embodiment of the disclosure provides a cylindrical battery. Please refer to FIG. 1 to FIG. 6. The cylindrical battery includes a wound core 20, and the wound core 20 includes: a wound core body 21; a first tab portion 22, which extends from one side of the wound core body 21, the wound core body 21 is formed with a wound core hole 211, the first tab portion 22 includes a first tab set 221 and a second tab set 222 adjacent to each other along a radial direction of the wound core hole 211 or in a direction opposite to the radial direction, the first tab set 221 includes at least two first tabs 2211, and the second tab set 222 includes a second tab 2221; a first gap 2212 is formed between adjacent first tabs 2211, and an orthographic projection of the second tab 2221 and an orthographic projection of the first gap 2212 on the same plane at least partially overlap each other along the radial direction of the wound core hole 211.

The cylindrical battery in an embodiment of the present disclosure includes a wound core 20, and the wound core 20 includes a wound core body 21 and a first tab portion 22. The first tab portion 22 extends from one side of the wound core body 21, and the wound core body 21 is formed with a wound core hole 211. The first tab portion 22 includes a first tab set 221 and a second tab set 222 adjacent to each other. The first tab set 221 includes at least two first tabs 2211, and the second tab set 222 includes a second tab 2221. By forming a first gap 2212 between adjacent first tabs 2211, it is possible to prevent the adjacent first tabs 2211 from overlapping each other. Moreover, an orthographic projection of the second tab 2221 and an orthographic projection of the first gap 2212 on the same plane at least partially overlap each other along the radial direction of the wound core hole 211, so that the second tab 2221 is able to cover at least part of the first gap 2212, thus avoiding the problem that part of the first tab portion 22 has a weak strength. In this manner, it is possible to improve the connection strength between the first tab portion 22 and the external structure, so that the safety and operation performance of the battery may be improved.

It should be noted that the cylindrical battery is a wound battery, and the wound core 20 may be wound around a wound core structure, so that after the wound core 20 is formed, the wound core structure is separated from the wound core 20, thereby forming a wound core hole 211 inside the wound core 20. The wound core structure may be a cylindrical structure, so that the wound core hole 211 is a cylindrical hole.

After the wound core 20 is formed by winding, the first tab portion 22 on the wound core body 21 may include a first tab set 221 and a second tab set 222 adjacent to each other. The first tab set 221 and the second tab set 222 may form at least part of the first tab portion 22 by being gathered together. In the winding process of the wound core 20, since the wound core 20 has a cylindrical structure, if there is no gap between the adjacent first tabs 2211, the problem of overlapping is likely to occur. As a result, part of the first tab portion 22 will be too thick, which not only makes it difficult for the first tab portion 22 to be connected to an external structure subsequently, but also the problem of pseudo soldering is likely to occur, which affects normal use of the battery afterwards. However, in this embodiment, by forming the first gap 2212 between adjacent first tabs 2211, and an orthographic projection of the second tab 2221 and an orthographic projection of the first gap 2212 on the same plane at least partially overlap each other along the radial direction of the wound core hole 211, in this manner, after the first tab set 221 and the second tab set 222 are gathered together, the second tab 2221 may cover at least part of the first gap 2212. As such, on the basis of preventing the adjacent first tabs 2211 from overlapping each other, it is possible to make the second tab 2221 to cover the first gap 2212, thus ensuring that the first tab portion 22 has a relatively stable thickness along the radial direction of the wound core hole 211. That is, the overall thickness of the first tab portion 22 is relatively stable, so the operation performance of the first tab portion 22 may be ensured.

The first tab portion 22 may be connected to an external structure, and the external structure may be an adapter sheet, or the external structure may be a pole lead-out structure, or the external structure may be a battery housing 10. The first tab portion 22 may be electrically connected to the pole lead-out structure through an adapter sheet.

The radial direction of the wound core hole 211 refers to the direction of expanding outward from the center of the wound core hole 211. Further, the radial direction of the wound core hole 211 refers to the direction of extending from the midpoint of the wound core hole 211 to the circumferential outer edge of the wound core body 21. As such, the direction opposite to the radial direction of the wound core hole 211 is the direction of extending from the circumferential outer side of the wound core body 21 to the center of the wound core hole 211. The first tab portion 22 includes the first tab set 221 and the second tab set 222 adjacent to each other along the radial direction of the wound core hole 211 or the direction opposite to the radial direction of the wound core hole 211. Therefore, when the first tab portion 22 includes the first tab set 221 and the second tab set 222 adj acent to each other along the radial direction of the wound core hole 211, the first tab set 221 may be closer to the wound core hole 211 as compared with the second tab set 222. When the first tab portion 22 includes the first tab set 221 and the second tab set 222 adjacent to each other along the direction opposite to the radial direction of the wound core hole 211, the second tab set 222 may be closer to the wound core hole 211 as compared with the first tab set 221.

For example, the radial direction of the wound core hole 211 may be considered as a direction pointing at the circumferential outer edge B of the wound core body 21 from the midpoint A of the wound core hole 211, and the direction opposite to the radial direction of the wound core hole 211 may be considered as a direction of pointing at A from B.

The first gap 2212 formed between adjacent first tabs 2211 is at least partially located on a side of the adjacent first tabs 2211 away from the wound core body 21.

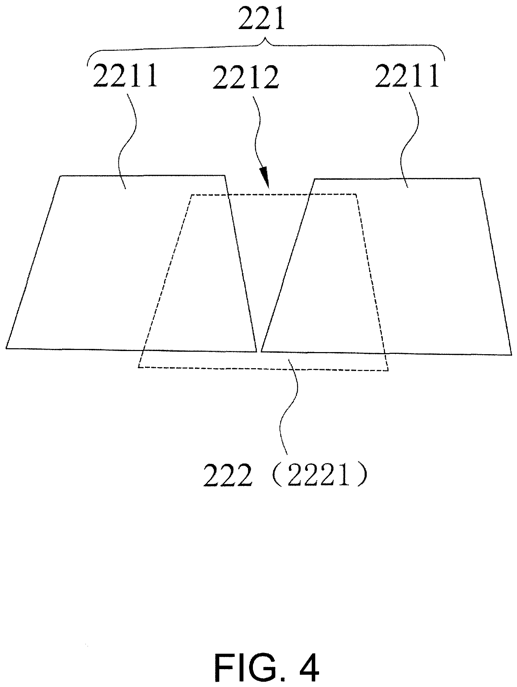

In an embodiment, as shown in FIG. 4, the first tab set 221 may include two first tabs 2211, the second tab set 222 may include one second tab 2221, and one second tab 2221 may cover one first gap 2212 formed by two first tabs 2211.

In an embodiment, the second tab set 222 includes at least two second tabs 2221, so that the second tab set 222 is able to form the first tab portion 22 with a large width, so as to ensure the current-passing capability of the first tab portion 22.

In an embodiment, the number of first tabs 2211 included in the first tab set 221 may be equal to the number of second tabs 2221 included in the second tab set 222. For example, the first tab set 221 may include two first tabs 2211, and the second tab set 222 may include two second tabs 2221. Under the circumstances, one second tab 2221 may cover a first gap 2212 formed by the two first tabs 2211, and another second tab 2221 may be located on one side of the first gap 2212. Under the circumstances, the first tab portion 22 may further include another single-piece tab, and this single-piece tab may be located in a different circle from the first tab set 221 and the second tab set 222. However, the single-piece tab may be located on the other side of the first gap 2212, so as to compensate for the thickness of the first tab portion 22 formed on the other side of the first gap 2212, so it may be ensured that the thicknesses of the first tab portion 22 may be substantially consistent.

In an embodiment, the number of the first tabs 2211 is less than the number of the second tabs 2221, so that on the basis that the second tabs 2221 are able to cover the first gap 2212, other second tabs 2221 may increase the thickness of the first tab portion 22 to ensure that the first tab portion 22 has sufficient current-passing capability.

In an embodiment, the number of the first tabs 2211 is one less than the number of the second tabs 2221, which not only ensures that the second tabs 2221 are able to cover the first gap 2212, but also the second tab set 222 does not excessively extend beyond the first tab set 221 along the circumferential direction of the wound core hole 211. As such, it may be ensured that the thickness of various parts of the first tab portion 22 may substantially be relatively consistent, and the structural strength of the first tab portion 22 may be ensured to meet the current-passing capability of the first tab portion 22.

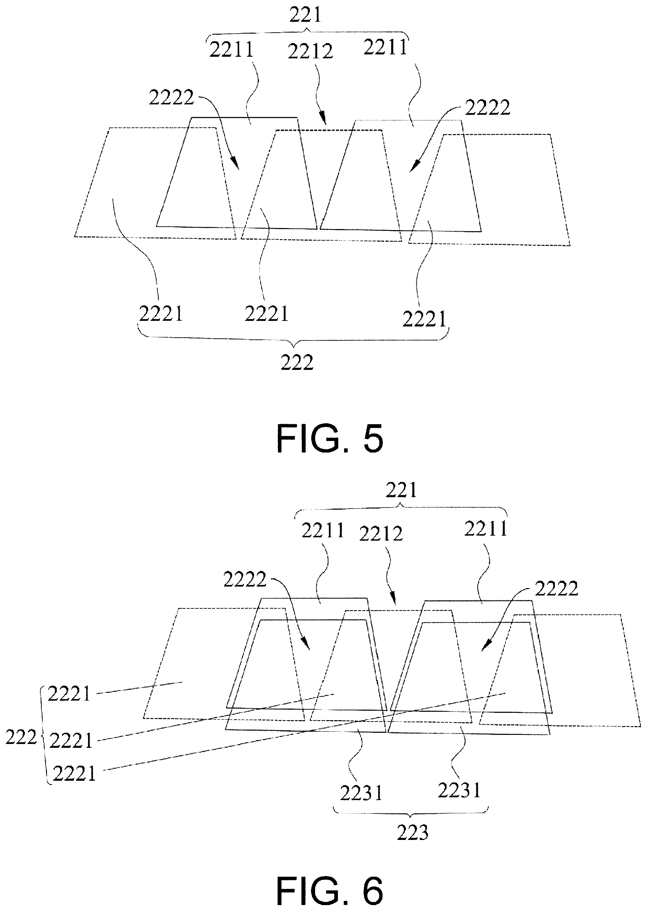

As shown in FIG. 5, the first tab set 221 may include two first tabs 2211, and the second tab set 222 may include three second tabs 2221. One second tab 2221 covers the first gap 2212, and the other two second tabs 2221 may be respectively located on two opposite sides of the first gap 2212, so as to increase the thickness of the first tab portion 22.

In an embodiment, as shown in FIG. 5, a second gap 2222 is formed between adjacent second tabs 2221, and an orthographic projection of the first tab 2211 and an orthographic projection of the second gap 2222 on the same plane at least partially overlap each other along the radial direction of the wound core hole 211. In this manner, on the basis of preventing adjacent second tabs 2221 from overlapping each other, it is also possible to enable the first tab 2211 to cover at least part of the second gap 2222, thereby avoiding the problem that part of the first tab portion 22 has a weak strength. In this way, the connection strength between the first tab portion 22 and the external structure may be increased, and it may be ensured that the first tab portion 22 has a reliable current-passing capability.

After the wound core 20 is formed by winding, the space between the first tab 2211 and the second tab 2221 is in a fluffy state, and the first tab 2211 and the second tab 2221 may be gathered together to ensure that the first tab 2211 and the second tab 2221 are in close contact with each other. Under the circumstances, the second tab 2221 may cover the first gap 2212, and the first tab 2211 may also cover the second gap 2222, so the structural strength of the first tab portion 22 may be ensured. As shown in FIG. 5, one second tab 2221 located in the middle may cover the first gap 2212, and two first tabs 2211 may respectively cover two second gaps 2222.

In an embodiment, as shown in FIG. 6, the first tab portion 22 further includes a third tab set 223 along the radial direction of the wound core hole 211 or in the direction opposite to the radial direction of the wound core hole 211. The third tab set 223 is arranged adjacent to the second tab set 222, and the third tab set 223 includes at least two third tabs 2231. An orthographic projection of the third tab 2231 and an orthographic projection of the second gap 2222 on the same plane at least partially overlap each other along the radial direction of the wound core hole 211, so that the first tab 2211 and the third tab 2231 may simultaneously cover two opposite ends of the second gap 2222, thereby improving the structural strength of the first tab portion 22. As such, the current-passing capability of the first tab portion 22 may be ensured, and the electron transmission rate of the wound core 20 may be improved.

In an embodiment, the number of the third tabs 2231 is one less than the number of the second tabs 2221, that is, the number of the third tabs 2231 of the third tab set 223 may be equal to the number of the first tabs 2211 of the first tab set 221. In this way, the first tab 2211 and the third tab 2231 are able to clamp the second set group 222, which can not only ensure the structural strength of the first tab portion 22, but also the arrangement of single-piece tabs is relatively simple, so that the difficulty of molding the wound core 20 may be reduced.

As shown in FIG. 6, the first tab set 221 may include two first tabs 2211, the second tab set 222 may include three second tabs 2221, and the third tab 2231 may include two third tabs 2231. The first tab 2211 and the third tab 2231 may cover the second gap 2222 simultaneously.

In an embodiment, the first tab set 221 and the second tab set 222 are arranged along the radial direction of the wound core hole 211, and the distance between the first tab set 221 and the wound core hole 211 is smaller than the distance between the second tab set 222 and the wound core hole 211. That is, the first tab set 221 is closer to the wound core hole 211, so that the width of the first tab portion 22 near the wound core hole 211 is relatively small, which to some extent prevents the first tab portion 22 from being in contact with the second tab portion 23 with the opposite polarity, so that the insulation capability between the first tab portion 22 and the second tab portion 23 may be increased.

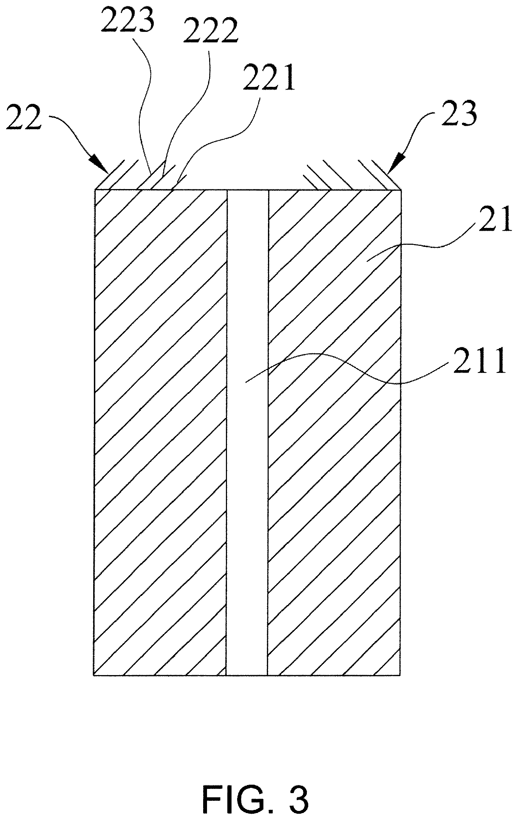

As shown in FIG. 3, the first tab set 221, the second tab set 222 and the third tab 2231 are arranged along the radial direction of the wound core hole 211, and the first tab portion 22 may further include a multi-layer single-piece tab, which is not limited here.

It should be noted that, in some embodiments, it is not excluded that the number of the first tabs 2211 is greater than the number of the second tabs 2221, furthermore, the number of the first tabs 2211 is one more than the number of the second tabs 2221.

The bottom ends of the first tab set 221, the second tab set 222 and the third tab 2231 shown in FIG. 4 to FIG. 6 are not on the same plane, that is, the first tab 2211, the second tab 2221 and the third tab 2231 are arranged in upper and lower layers in a staggered manner. The focus here is to reflect that the first tab set 221, the second tab set 222, and the third tab 2231 are able to cover each other, which does not refer to any specific configuration. For example, the bottom ends of the first tab 2211, the second tab 2221 and the third tab 2231 may be located on the same plane, and the top ends of the first tab 2211, the second tab 2221 and the third tab 2231 after being gathered together may be on the same plane.

In an embodiment, the shape of the first tab 2211 is substantially a first trapezoid, and the width of the first tab 2211 is gradually reduced from one end connected to the wound core body 21 to the extending direction of the other end. In this manner, the bottom end of first tab 2211 is longer and the top end thereof is shorter. During the process of forming the wound core 20 by winding, it is possible to effectively prevent the top ends of two adjacent first tabs 2211 from overlapping each other.

The shape of the second tab 2221 is substantially a second trapezoid, and the width of the second tab 2221 is gradually reduced from one end connected to the wound core body 21 toward the extending direction of the other end, so that it is possible to prevent the top ends of adjacent second tabs 2221 from overlapping each other.

It should be noted that the shape of the first tab 2211 is substantially a first trapezoid, and the shape of the second tab 2221 is substantially a second trapezoid. Here, the emphasis is that the overall shape of the first tab 2211 and the second tab 2221 is trapezoidal, and the arc transition between the circumferential edges and the like may be ignored.

In an embodiment, adjacent first tabs 2211 are arranged at intervals, that is, the bottom ends of adjacent first tabs 2211 are not connected to each other, so that a relatively large first gap 2212 may be formed between adjacent first tabs 2211, so it is possible to prevent adjacent first tabs 2211 from overlapping each other.

The maximum width dimension of the first gap 2212 is smaller than the minimum width dimension of the second tab 2221 along the circumferential direction of the wound core hole 211, so that the second tab 2221 is able to cover a part of two adjacent first tabs 2211.

It should be noted that, in some embodiments, it is not excluded that adjacent first tabs 2211 are connected to each other, that is, the bottom ends of adjacent first tabs 2211 are connected to each other.

In an embodiment, the center line of the wound core hole 211, the center line of the first tab set 221 and the center line of the second tab set 222 are located on the same plane, so that the first tab portion 22 may have a relatively stable position, so as to conveniently control the positional relationship between the first tab portion 22 and the second tab portion 23, ensure the insulation gap between the first tab portion 22 and the second tab portion 23, and ensure that the first tab portion 22 may have a reliable structural strength.

The center line of the first tab set 221 is the center line of multiple first tabs 2211. For example, if there are two first tabs 2211, then the two first tabs 2211 may be axisymmetric with respect to a certain line. Under the circumstances, the axis of symmetry of the two first tabs 2211 is the center line of the first tab 2211. Correspondingly, for example, the second tab set 222 may include three second tabs 2221, the axis of symmetry of a single second tab 2221 is the center line of the second tab set 222.

It should be noted that the first tab portion 22 may include multi-layer single-piece tab sets, and the center lines of each layer of single-piece tab sets may all be located on the same plane.

In an embodiment, as shown in FIG. 2 and FIG. 3, the wound core 20 further includes a second tab portion 23, the polarities of the first tab portion 22 and the second tab portion 23 are opposite, and the first tab portion 22 and the second tab portion 23 extend from the same side of the wound core body 21. The first tab portion 22 and the second tab portion 23 are arranged at intervals, thereby ensuring that the first tab portion 22 and the second tab portion 23 are insulated from each other to avoid short circuit problems.

The polarity of the first tab portion 22 is opposite to the polarity of the second tab portion 23, and one of the first tab portion 22 and the second tab portion 23 is a positive tab, and the other is a negative tab. The first tab portion 22 and the second tab portion 23 are designed to extend from the same side of the wound core body 21, such that the problem of excessive accumulation of height space caused by the first tab portion 22 and the second tab portion 23 extending from two opposite sides of the wound core body 21 may be avoided.

The battery includes a wound core and an electrolyte, the minimum unit capable of performing electrochemical reactions such as charging/discharging. The wound core refers to a unit formed by winding or laminating a stack portion including a first electrode, a separator and a second electrode. When the first electrode is a positive electrode, the second electrode is a negative electrode, and the polarities of the first electrode and the second electrode are interchangeable. A first tab portion 22 and a second tab portion 23 may extend from the first electrode and the second electrode respectively, and the wound core 20 is formed after the first electrode and the second electrode are wound, and the first tab portion 22 and the second tab portion 23 may be formed by gathering multiple layers of tab sets.

In an embodiment, the distance between the first tab portion 22 and the wound core hole 211 is greater than 0, and the distance between the second tab portion 23 and the wound core hole 211 is greater than 0, so that the insulation capacity between the first tab portion 22 and the second tab portion 23 may be enhanced.

It should be noted that, in some embodiments, it is not excluded that the distance between the first tab portion 22 and the wound core hole 211 may be equal to 0, and the distance between the second tab portion 23 and the wound core hole 211 may be equal to 0.

In an embodiment, the first tab portion 22 and the second tab portion 23 are arranged at intervals along the circumferential direction of the wound core hole 211, that is, the first tab portion 22 is arranged at intervals around the circumferential direction of the wound core hole 211 of the second tab portion 23. In this way, it is possible to maximize the connection area between the first tab portion 22 and the second tab portion 23, and ensure that the first tab portion 22 and the second tab portion 23 may have a reliable current-passing area.

In an embodiment, there is one first tab portion 22 and one second tab portion 23, and the first tab portion 22 and the second tab portion 23 are arranged along the circumferential direction of the wound core hole 211. Such configuration not only has a simple structure, and on the basis of ensuring the insulation gap between the first tab portion 22 and the second tab portion 23, it may also be ensured that the first tab portion 22 and the second tab portion 23 may have a reliable current-passing capability.

It should be noted that, in some embodiments, it is not excluded that the first tab portion 22 and the second tab portion 23 may extend from two opposite sides of the wound core body 21. There may also be a plurality of the first tab portion 22 and the second tab portion 23 respectively.

In an embodiment, as shown in FIG. 1, the cylindrical battery further includes a pole lead-out structure 30, which may be disposed on the battery housing 10, and the wound core 20 may be electrically connected to the pole lead-out structure 30. For example, the first tab portion 22 of the wound core 20 may be electrically connected to the pole lead-out structure 30, and the pole lead-out structure 30 may be insulated from the battery housing 10, and the second tab portion 23 of the wound core 20 may be electrically connected to the battery housing 10.

The cylindrical battery may include two pole lead-out structures 30, and the first tab portion 22 and the second tab portion 23 of the wound core 20 may be electrically connected to the two pole lead-out structures 30 respectively.

In an embodiment, the battery housing 10 may include a cover plate and a housing member, the pole lead-out structure 30 may be disposed on the cover plate, and the housing member may be formed with an accommodating space. In this way, after the cover plate and the housing member are connected, effective protection for the wound core 20 is realized: The cover plate and the housing member may be welded together, or the cover plate and housing member may be riveted together.

An embodiment of the present disclosure further provides a battery assembly, including the above-mentioned cylindrical battery.

A cylindrical battery of the battery assembly in an embodiment of the disclosure includes a wound core 20, and the wound core 20 includes: a wound core body 21; a first tab portion 22, which extends from one side of the wound core body 21, the wound core body 21 is formed with a wound core hole 211, the first tab portion 22 includes a first tab set 221 and a second tab set 222 adjacent to each other, the first tab set 221 includes at least two first tabs 2211, and the second tab set 222 includes a second tab 2221. By forming a first gap 2212 between adjacent first tabs 2211, it is possible to prevent the adjacent first tabs 2211 from overlapping each other. Moreover, an orthographic projection of the second tab 2221 and an orthographic projection of the first gap 2212 on the same plane at least partially overlap each other along the radial direction of the wound core hole 211, so that the second tab 2221 is able to cover at least part of the first gap 2212, thus avoiding the problem that part of the first tab portion 22 has a weak strength. In this manner, it is possible to improve the connection strength between the first tab portion 22 and the external structure, so that the safety and operation performance of the battery may be improved.

In an embodiment, the battery assembly is a battery module or a battery pack.

The battery module includes a plurality of cylindrical batteries, and the battery module may further include a bracket on which the batteries may be fixed.

The battery pack includes a plurality of cylindrical batteries and a box body, and the box body is configured to fix the plurality of cylindrical batteries.

It should be noted that the battery pack includes the cylindrical battery, and there may be a plurality of cylindrical batteries. The plurality of cylindrical batteries are placed in the box body. A plurality of cylindrical batteries may be disposed in the box body after forming into a battery module. Alternatively, a plurality of cylindrical batteries may be directly disposed in the box body, that is, it is not necessary to group the plurality of cylindrical batteries together, and the box body may be used to fix the plurality of cylindrical batteries.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure.

## Claims

1. A cylindrical battery, comprising a wound core (20), wherein the wound core (20) comprises:
a wound core body (21);
a first tab portion (22), which extends from one side of the wound core body (21), wherein the wound core body (21) is formed with a wound core hole (211), the first tab portion (22) comprises a first tab set (221) and a second tab set (222) adjacent to each other along a radial direction of the wound core hole (211) or in a direction opposite to the radial direction, the first tab set (221) comprises at least two first tabs (2211), and the second tab set (222) comprises a second tab (2221);
wherein a first gap (2212) is formed between the adjacent first tabs (2211), and an orthographic projection of the second tab (2221) and an orthographic projection of the first gap (2212) on a same plane at least partially overlap each other along the radial direction of the wound core hole (211).

2. The cylindrical battery according to claim 1, wherein the second tab set (222) comprises at least two second tabs (2221).

3. The cylindrical battery according to claim 2, wherein the number of the first tabs (2211) is less than the number of the second tabs (2221).

4. The cylindrical battery according to claim 3, wherein the number of the first tabs (2211) is one less than the number of the second tabs (2221).

5. The cylindrical battery according to claim 4, wherein a second gap (2222) is formed between the adjacent second tabs (2221), and an orthographic projection of the first tab (2211) and an orthographic projection of the second gap (2222) on a same plane at least partially overlap each other along the radial direction of the wound core hole (211).

6. The cylindrical battery according to claim 5, wherein the first tab portion (22) further comprises a third tab set (223) along the radial direction of the wound core hole (211) or in the direction opposite to the radial direction of the wound core hole (211), the third tab set (223) is arranged adjacent to the second tab set (222), and the third tab set (223) comprises at least two third tabs (2231), an orthographic projection of the third tab (2231) and the orthographic projection of the second gap (2222) on a same plane at least partially overlap each other along the radial direction of the wound core hole (211).

7. The cylindrical battery according to claim 6, wherein the number of the third tabs (2231) is one less than the number of the second tabs (2221).

8. The cylindrical battery according to any one of claims 3-7, wherein the first tab set (221) and the second tab set (222) are arranged along the radial direction of the wound core hole (211), and a distance between the first tab set (221) and the wound core hole (211) is smaller than a distance between the second tab set (222) and the wound core hole (211).

9. The cylindrical battery according to any one of claims 1-7, wherein a shape of the first tab (2211) is substantially a first trapezoid, and a width of the first tab (2211) is gradually reduced from one end connected to the wound core body (21) to an extending direction of the other end; and/or, a shape of the second tab (2221) is substantially a second trapezoid, and a width of the second tab (2221) is gradually reduced from the one end connected to the wound core body (21) toward the extending direction of the other end.

10. The cylindrical battery according to any one of claims 1-7, wherein the adjacent first tabs (2211) are arranged at intervals.

11. The cylindrical battery according to any one of claims 1-7, wherein a center line of the wound core hole (211), a center line of the first tab set (221) and a center line of the second tab set (222) are located on a same plane.

12. The cylindrical battery according to any one of claims 1-7, wherein the wound core (20) further comprises a second tab portion (23), polarities of the first tab portion (22) and the second tab portion (23) disposed at intervals are opposite, and the first tab portion (22) and the second tab portion (23) extend from a same side of the wound core body (21).

13. The cylindrical battery according to claim 12, wherein a distance between the first tab portion (22) and the wound core hole (211) and a distance between the second tab portion and the wound core hole (211) are both greater than 0.
